# EUROPEAN PATENT SPECIFICATION

(11) **EP 3 338 011 B1**
(45) Date of publication and mention of the grant of the patent: **26.02.2020**
(21) Application number: 16839892.3
(22) Date of filing: 19.08.2016
(51) Int. Cl.: F16J 15/24, F04B 15/02, F04B 1/12, F04B 1/04, F04B 53/02, F04B 53/14, F16J 15/18

(54) **PACKING STACKS FOR PISTON PUMPS**
VERPACKUNGSSTAPEL FÜR KOLBENPUMPEN
EMPILEMENTS DE GARNITURES POUR POMPE À PISTON

(30) Priority: 21.08.2015 US 201562208293 P
(43) Date of publication of application: 27.06.2018
(73) Proprietor: Graco Minnesota Inc., Minneapolis, MN 55413 (US)
(72) Inventor: HORNING, Jeromy, D., Albertville, Minnesota 55301 (US)
(74) Representative: Miller Sturt Kenyon
(86) International application number: PCT/US2016/047812
(87) International publication number: WO 2017/034996

(56) References cited:
- EP-A2- 0 927 824
- EP-B1- 1 249 607
- DE-A1-102010 052 558
- JP-A- 2006 189 025
- US-A- 4 300 776
- US-A- 5 228 842
- US-A1- 2006 115 369
- US-A1- 2006 115 369
- US-A1- 2009 289 423
- US-A1- 2009 289 423
- US-A1- 2010 066 034
- US-A1- 2015 175 787
- US-B1- 6 276 259
- US-B1- 6 276 259

## Description

### BACKGROUND

Various types of packings have been used to seal reciprocating piston pumps for pumping paint and other materials. One construction for packing stacks has alternating V-shaped packing rings (i.e. packing rings with a V-cross-section) of leather and a synthetic material. The leather cushions and flexes with resiliency, allowing the synthetic material to seal. This material combination has also proven compatible with a variety of solvents and other components of the fluids to be pumped. However, it may be hard to maintain consistent quality and mechanical performance with natural leather.

US 5228842 discloses a quick-change fluid section for piston-type paint pumps having a mounting flange with keyhole shaped apertures at one end and a threaded fitting at the other end to couple a fluid section housing to driving means via a slide housing. The piston and slide are retained in reciprocable driving relationship via a transverse pin held in place by a circumferential spring received in a circumferential groove on the slide. The spring and pin are accessible via diametrically opposed apertures in the mounting flange. The fluid section housing is bifurcated and has sealing means which may be either a packing set of alternating elastomeric and leather V-rings or lip-type seals. The sealing means is immediately available upon separation of the two portions of the fluid section and may be removed without the need for special tools. An inline or right angle inlet or suction fitting may be utilized with the fluid section.

US 2006/115369 discloses a packing stack for a reciprocating piston pump that is formed of alternating V's of UHMWPE and either a polyurethane thermoplastic elastomer or an olefinic thermoplastic elastomer.

US 2010/066034 discloses a packing stack according to the preamble of claim 1. Said document discloses a V-ring seal that comprises an upper V-shaped recess, an inner wall, an exterior wall and a V-shaped lower surface. An annular groove whose bottom is an open arc is disposed on a bottom of the upper recess.

US 2015/175787, US 2009/289423 and JP 2006-189025 are also relevant.

### SUMMARY

According to an aspect of the invention, there is provided a packing stack as defined in claim 1.

### BRIEF DESCRIPTION OF THE DRAWINGS

Fig. 1A and 1B are exploded and cross sectional views, respectively, of a piston pump.
Fig. 2 is an exploded sectional view of a throat seal stack of the pump shown in Figs. 1A and 1B, in which the throat seal stack is formed by alternating first type and second type V-shaped packing rings of identical geometry.
Figs. 3A-3C are cross-sectional, top, and bottom views, respectively, of a V-shaped packing ring of the throat seal stack.
Fig. 4 is a cross sectional view of adjacent stacked first and second type V-shaped packing rings of identical geometry.
Figs. 5A and 5B are cross sectional views of a throat seal stack of first type and second type V-shaped packing rings of identical geometry under lightly loaded and fully loaded conditions, respectively.

### DETAILED DESCRIPTION

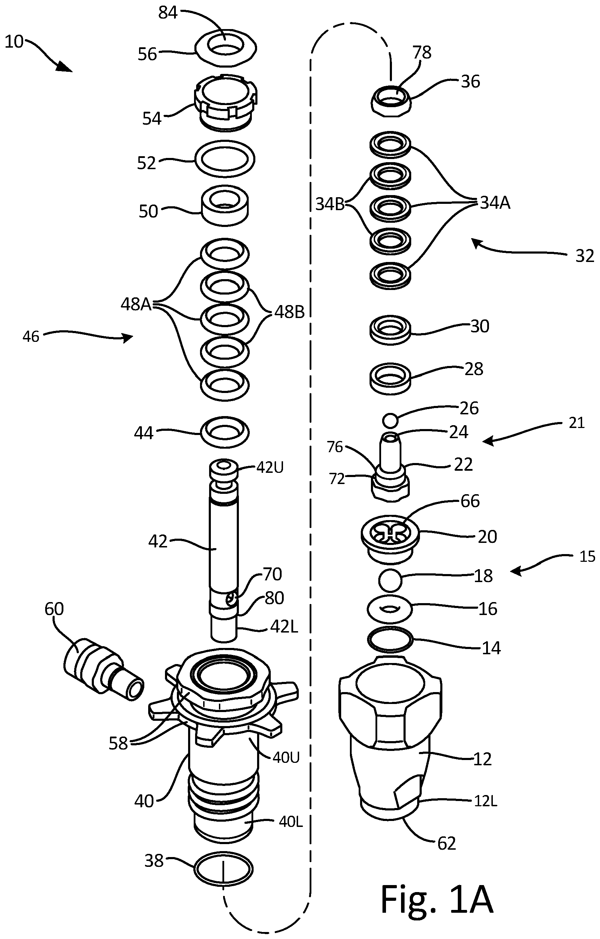

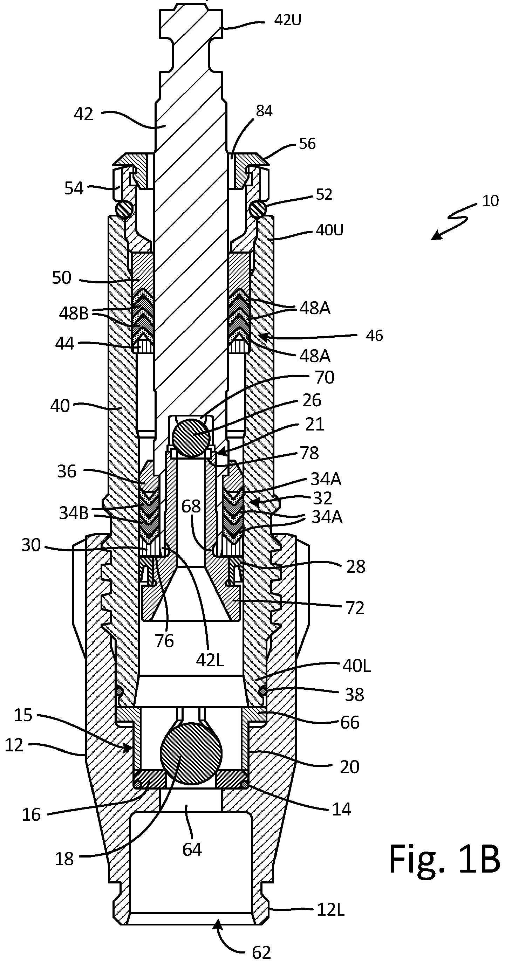

Figs. 1A and 1B show piston displacement pump 10, which is an example of a piston pump that can be used to pump paint and/or other solutions. While paint will be used in this disclosure as an exemplar, it should be understood that this is merely one example and that other fluids (such as water, oil, solvents, etc.) can be pumped instead of paint.

Fig. 1A is an exploded view of pump 10, and Fig. 1B is a cross-sectional view of pump 10. Figs. 1A and 1B will be discussed together.

Piston displacement pump 10 includes intake housing 12, O-ring 14, inlet check valve 15 (formed by seal 16, ball 18, and ball guide 20), outlet check valve 21 (formed by piston valve 22, seat 24, and ball 26), piston guide 28, female piston gland 30, piston seal (or packing) stack 32 (formed by first type V-shaped piston packing rings 34A and second type V-shaped piston packing rings 34B), male piston gland 36, O-ring 38, pump cylinder 40, displacement rod 42, male throat gland 44, throat seal (or packing) stack 46 (formed by first type V-shaped throat packing rings 48A and second type V-shaped throat packing rings 48B), female throat gland 50, O-ring 52, packing nut 54, and plug button 56. Also shown in Fig. 1A, but not in Fig. 1B, are retaining nuts 58 and pump outlet fitting 60.

Intake housing 12 is threaded onto lower end 40L of pump cylinder 40. Inlet 62, which is located at lower end 12L of intake housing 12, is connected through passage 64 to inlet check valve 15 (formed by seat 16, ball 18, and ball guide 20). Seat 16 is sealed to intake housing 12 by O-ring 14. Ball guide 20 and seat 16 are held in place by lower end 40L of pump cylinder 40, which abuts upper flange 66 of ball guide 20. Lower end 40L of pump cylinder 40 is sealed to the inner wall of intake housing 12 by O-ring 38.

Piston valve 22, seat 24, and ball 26 of outlet check valve 21 extend into bore 68 at lower end 42L of displacement rod 42. Outlet check valve 21, communicates with outlet passage 70 of displacement rod 42.

Piston guide 28 mounts over piston valve 22 and rests on shoulder 72 of piston valve 22, Female piston gland 30, piston seal stack 32 (formed by alternating first and second type V-packing rings 34A and 34B), and male piston gland 36 are positioned between the lower end 42L of displacement rod 42 and the inner wall of pump cylinder 40. Female piston gland 30 rests against piston guide 28 and shoulder 76 of piston valve 22. Internal shoulder 78 of male piston gland 36 engages shoulder 80 of displacement rod 42. Male piston gland 30, female piston gland 36, and V-packing rings 34A and 34B provide a seal between displacement rod 42 and pump cylinder 40 that moves with displacement rod 42 as it reciprocates. Piston glands 30 and 36 can slightly axially compress packing rings 36A and 36B so that piston seal stack 32 experiences a preload.

Male throat gland 44, first type polymer V-shaped throat packing rings 48A, second type polymer v-shaped throat packing rings 48B, and female throat gland 50 form a seal between displacement rod 40 and upper end 40U of pump cylinder 40. Male throat gland 44 rests against shoulder 82 on the interior wall of pump cylinder 40. Female throat gland 50 is held in place by packing nut 54, which is inserted into upper end 40U of pump cylinder 40. O-ring 52 seals packing nut 54 and pump cylinder 40. Plug button 84 inserts into the upper end of packing nut 54. Upper end 42V of displacement rod 42 extends out through passage 84 of plug button 56. Throat glands 44 and 50 and packing rings 48A and 48B are held in place within pump cylinder 40 by packing nut 54. They provide a seal between displacement rod 42 and pump cylinder 40 that is stationary while displacement rod 42 moves up and down within pump cylinder 40. Throat glands 44 and 50 can slightly axially compress packing rings 48A and 48B so that throat seal stack 46 experiences a preload.

In operation, displacement rod 42 is driven in a reciprocating manner up and down within pump cylinder 40. On an up stroke, fluid to be pumped will enter inlet 62, flow through passage 64, and flow through inlet check valve 15 into the interior of pump cylinder 40. When displacement rod 42 begins moving downward during a down stroke, ball 18 will move onto seat 16, thus closing inlet check valve 15 so that fluid within pump cylinder 40 will not be forced downward and out of inlet 62. As displacement rod 42 moves downward, ball 26 of outlet check valve 21 moves upward away from seat 24, which allows fluid within pump cylinder 40 to flow through the interior of piston valve 22, past ball 26, and into outlet passage 70. The fluid then exits pump cylinder 40 through pump outlet fitting 60.

In Figs. 1A and 1B, piston seal stack 32 and throat seal stack 46 are used to maintain pressure within piston pump 10 and prevent leakage. Throat seal stack 46 and piston seal stack 32 are mounted such that piston seal stack 32 moves with displacement rod 42 relative to pump cylinder 40, and throat seal stack 46 remains stationary on pump cylinder 40, while displacement rod 42 reciprocates. In various alternative embodiments, throat seal stack 46 and piston seal stack 32 may be mounted so that both move with displacement rod 42, both are stationary as displacement rod 42 reciprocates, or throat seal stack 46 moves and piston seal stack 32 is stationary. While two seal stacks are shown in Figs. 1A and 1B, a greater number of seal stacks, or only one seal stack, may alternatively be used. It will be understood that the seal stacks of the present disclosure can be used in various types of pumps and are not limited to the particular type of piston pump illustrated.

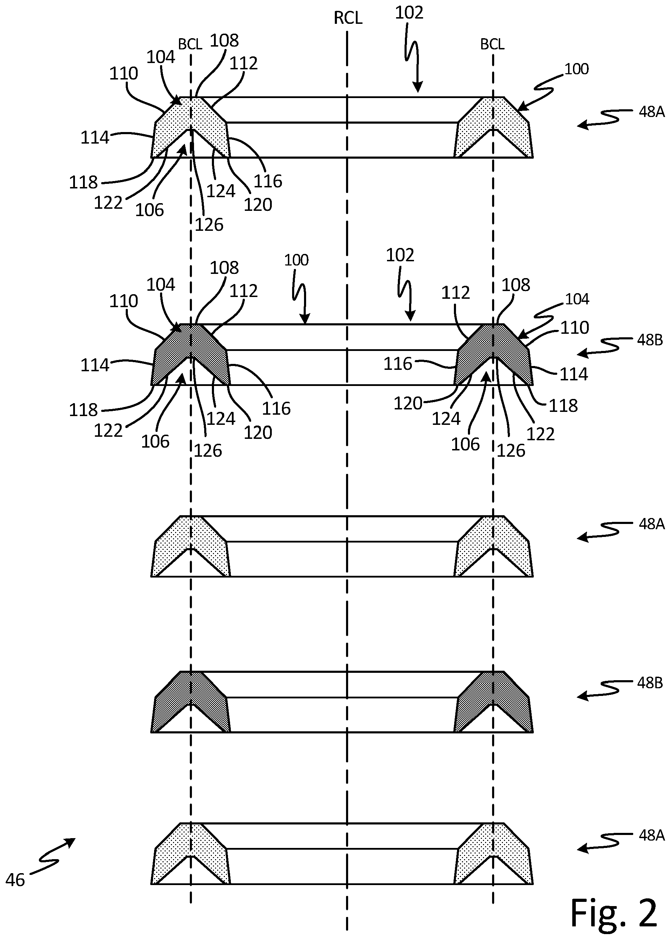

Each of throat seal stack 46 and piston seal stack 32 includes alternating polymer V-shaped rings of two different types. Fig. 2 is an exploded sectional view of throat seal stack 46, which includes five V-shaped rings of essentially identical shape but of two different compositions. The rings are arranged from top to bottom in the following order: first type ring 48A, second type ring 48B, first type ring 48A, second type ring 48B, and first type ring 48A.

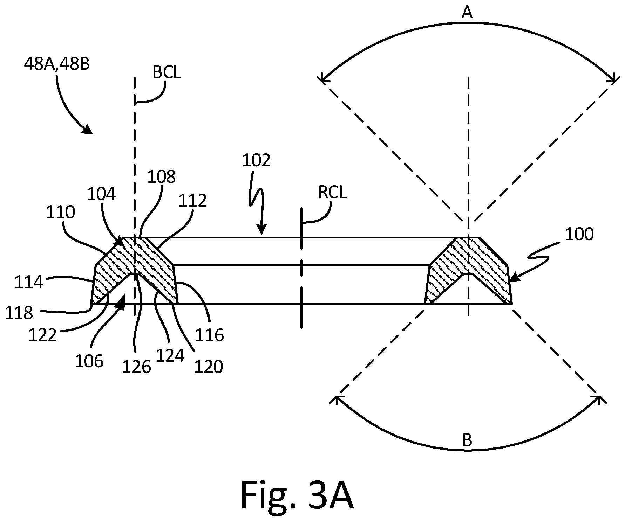

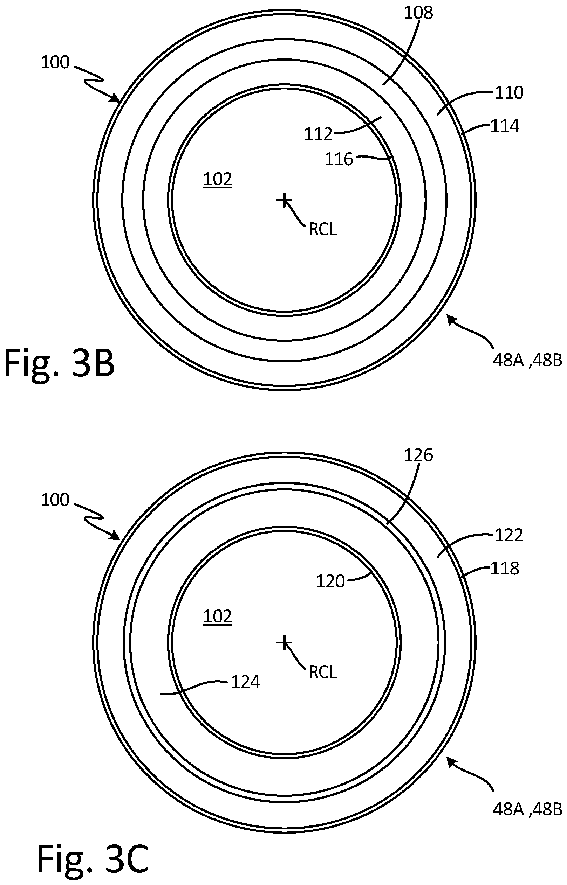

Figs. 3A and 3B show top and bottom views of first type ring 48A. Because rings 48A and 48B have the same shape/geometry, Figs. 3A and 3B are representative of both first and second type rings. Figs. 2, 3A, and 3B will be discussed together.

Although not shown in Figs. 2, 3A, 3B, piston seal stack 32 has a similar arrangement of five alternating first and second type rings 34A and 34B. Rings 34A and 34B differ somewhat in diameter from rings 48A and 48B, but have similar shape/geometry and similar composition to rings 48A and 48B, respectively. Therefore, throat seal stack 46 as shown in Fig. 2 is representative of both of throat seal stack 46 and piston seal stack 32. In the remaining description, discussion of throat seal stock 46 and rings 48A and 48B is also applicable to piston seal stack 32 and rings 34A and 34B.

Stack 46 of alternating first and second type rings 48A and 48B in Figs 2, 3A, and 3B can correspond to one or both of the throat seal stack 46 and of piston seal stack 32 of the piston pump 10 of Fig. 1. Stack 46 includes first type rings 48A alternating with second type rings 48B. First type rings 48A are formed from a different material composition than the second type rings 48B. First type rings 48A is formed from a first type of polymer material, such as ultrahigh molecular weight polyethylene (UHMWPE). In some embodiments, first type ring 48A may be formed of UHMWPE that incorporates polytetrafluroethylene (PTFE), i.e., PTFE filled UHMWPE. Second type ring 48B is formed from a second type of polymer material, which may also have UHMWPE as a base material, with a lubricant added. In some embodiments, the second type rings 48B may be oil-filled or carbon (graphite)-filled UHMWPE. UHMWPE materials offer a number of advantageous physical properties for first type and second type rings. These include resistance to corrosive chemicals, low moisture adsorption, very low coefficient of friction, abrasion resistance, and self-lubrication. Materials added to UHMWPE can enhance physical properties of the rings, such as coefficient of friction and abrasion resistance. In particular, oil filled and carbon filled UHMWPE provide lower coefficients of friction for second type V-shaped rings compared to first type V-shaped rings. As a result, second type rings 48B (or 32B) do not fuse or weld to first type rings 48A (or 34A) when seal stack 46 (or 32) is under pressure. This avoids a potential source of failure of seal stacks 46 and 32.

Despite being formed from different material compositions, first type ring 48A may be structurally (e.g., geometrically and dimensionally) identical to second type rings 48B. Specifically, each of first type rings 48A and second type rings 48B may correspond to the embodiment of ring 48A,48B illustrated in Figs. 3A-3C. Ring 48A,48B includes annular body 100 that surrounds central passage 102, annular body 100 includes front rib 104, rear groove 106, front apex surface 108, outer front angled surface 110, inner front angled surface 112, outer side surface 114, inner side surface 116, outer rear rim surface 118, inner rear rim surface 120, outer rear angled surface 122, inner rear angled surface 124, trench surface 126. Front rib 104, rear groove 106, and surfaces 108-126 are annular. Each of first type ring 48A and second type ring 48B has a "V" cross sectional profile such that rings 48A and 48B can stack and seat against one another. From the cross sectional perspective shown, the surfaces are flat and meet each other at fine edges. This is different from leather rings which typically have rounded surfaces with no clear transition between the different surfaces.

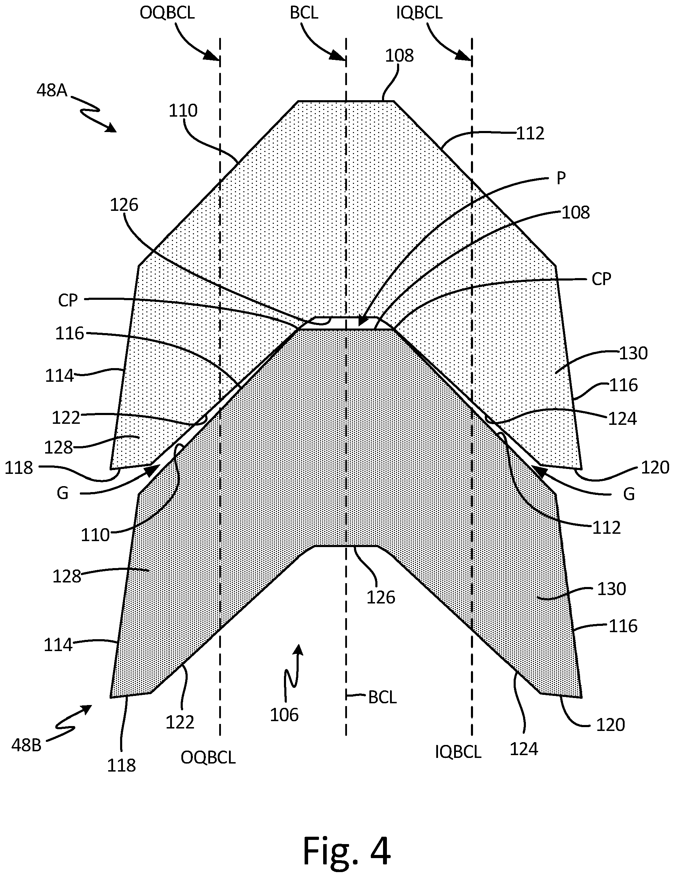

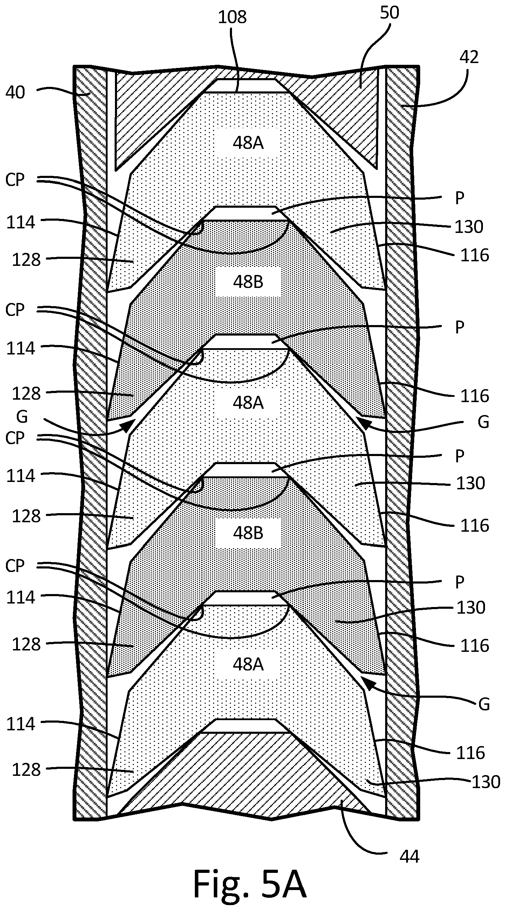

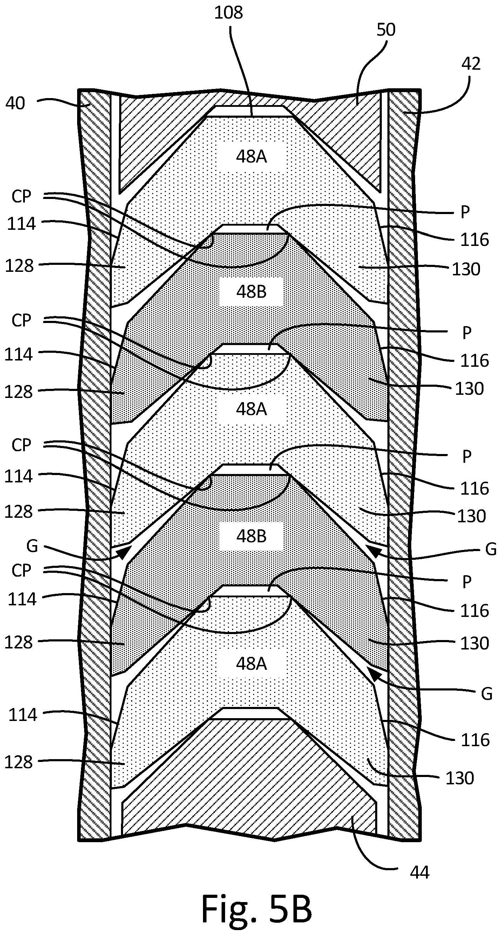

Outer front angled surface 110 forms angle A with inner front angled surface 112. Outer rear angled surface 122 forms angle B with inner rear angled surface 124. It has been determined that, in various embodiments, it is preferable that angle B be larger than angle A, so that gaps G (shown in Figs 4, 5A, and 5B) are formed between surfaces 122 and 110 and between surfaces 124 and 112 when rings 48A and 48B are stacked. In some embodiments, angle A is 90 degrees, or approximately 90 degrees, while angle B is 95 degrees, or approximately 95 degrees. It also is preferable that front apex surface 108 be wider (in the radial direction) than trench surface 126.The difference in widths of surfaces 108 and 126, and the difference in angles A and B, affect the location of contact points CP and the size of pocket P (shown in Figs. 4, 5A, and 5B). The outer front angled surface 110 and the inner front angled surface 112 can be the same length. The outer side surface 114 and inner side surface 116 can be the same length. The outer rear angled surface 122 and the inner rear angled surface 124 can be the same length. The front apex surface 108 is parallel with the trench surface 126.

Body centerline BCL extends through the center of body portion 100 of ring 48A,48B. In other words, body centerline BCL extends through the material that forms ring 48A,48B. Body centerline BCL is equidistant from outer side surface 114 and inner side surface 116. Ring centerline RCL extends through the void at the radial center of ring 48A,48B. Ring centerline RCL does not extend through the material that forms ring 114. The outer front angled surface 110 and the inner front angled surface 112 are mirrored with respect to each other about the BCL. The outer side surface 114 and inner side surface 116 are mirrored with respect to each other about the BCL. The outer rear angled surface 122 and the inner rear angled surface 124 are mirrored with respect to each other about the BCL.

Fig. 4 is a detailed cross sectional view of rings 48A and 48B isolated from the remainder of piston pump 10. As shown, contact points CP between adjacent surfaces 112, 114 are laterally closer to body centerline BCL than to outer side surface 114 and inner side surface 116. Similarly, contact points CP between adjacent rings 48A,48B are laterally closer to top apex surface 108 and trench surface 126 than to outer side surface 114 and inner side surface 116. Parallel with body centerline BCL are outer quarter body centerline OQBCL and inner quarter body centerline IQBCL. Inner quarter body centerline IQBCL is laterally closer to ring centerline RCL (Fig. 3A) than outer quarter body centerline OQBCL. Outer quarter body centerline OABCL is a quarter distance across body 100 of the ring 48A,48B as measured from outer side surface 114, while inner quarter body centerline IQBCL is three quarters of the distance across body 100 of ring 48A,48B as measured from outer side surface 114. It is noted that third, fifth, tenth, etc. body centerlines could also be established in a similar manner as quarter body centerlines OQBCL and IQBCL. As shown, all contact between rings 48A,48B is between outer quarter body centerline OQBCL and inner quarter body centerline IQBCL such that rings 48A,48B do not contact each other laterally beyond outer quarter body centerline OQBCL and inner quarter body centerline IQBCL. In other words, all contact between rings 48A,48B, from a cross sectional perspective, is limited to the center half of annular bodies 100, and the inner and outer quarters of ring annular bodies 100 do not contact each other and are instead separated by gaps G between surfaces 110 and 122 and between surfaces 112 and 124. In some embodiments, all contact between the rings 48A,48B, from a cross sectional perspective, is limited to the center third of annular bodies 100, and the inner and outer thirds of bodies 100 of rings 48A,48B do not contact each other. In some further embodiments, all contact between rings 48A,48B is limited to a center lateral quarter. In some embodiments, all contact between adjacent rings 48A,48B is limited to an annular edge created by the intersection of top apex surface 108 with the outer top angled surface 110 and inner top angled surface 112. In Fig. 4, contact points CP are closer to BCL than to either OQBCL or IQBCL.

Ring includes outer lobe 128 and inner lobe 130. Outer lobe 128 is defined by outer side surface 114, outer rear rim 118, and outer rear angled surface 122. Inner lobe 130 is defined inner side surface 116, inner rear rim 120, and inner rear angled surface 124. When stack 46 is under compression, inner and outer lobes 128, 130 can pivot about contact points CP to extend radially, in a flaring motion, to engage the surfaces of pump cylinder 40 and displacement rod 42 to facilitate sealing. Gaps G thus allows the articulation of inner and outer lobes 128, 130 to facilitate sealing, whereas the absence of gaps G would inhibit such movement and make sealing more difficult. Such articulation can replicate the spring-like behavior of leather rings without the inner and outer edge wear characteristics of leather rings, and without the associated reduction in stack height and sealing performance over time that results when leather rings are used. In the prior art stacks using alternating polymer and leather rings, the inner and outer radial portions of the rings had dual functionality in sealing engagement and stacking engagement which lead to reduced stacking height and sealing performance. In contrast, stacks 46 and 32 separate the portions of rings 48A,48B or 34A,34B that respectively perform sealing engagement and stacking engagement, such that frictional wear due to sealing engagement does not undermine stacking height.

In addition, the geometry of rings 48A,48B and 34A,34B minimizes the size of pocket P between rings 48A,48B to minimize the trapping of pressurized air and/or media. The small size and inward location of pockets P produced by the mating of adjacent rings provides significant benefit compared to traditional packings that experience pressure traps between adjacent rings. The pressure traps can expand the packing stack, and can cause additional friction and wear. In contrast, pockets P are small and located inward from the sealing edges, do not expand the packings when under pressure, and are not a source of additional friction and wear.

Fig. 5A represents stack 46 in a nominally compressed state, while Fig. 5B represents stack 46 in a state of greater compression. The nominally compressed state illustrated in Fig. 5A may be experienced when piston pump 10 is not in operation, while the state of greater relative compression illustrated Fig. 5B may be experienced when piston pump 10 is actively pumping. As shown in Fig. 5A, inner and outer side surfaces 114,116 of first type rings 48A and second type rings 48B are lightly engaged with the inner wall of pump cylinder 40 and the outer wall of displacement rod 42. However, as shown in Fig. 5B, stack 46 is subject to greater compression when piston pump 10 operates (e.g., due to the glands 44 and 50 moving closer together and/or internal fluid pressure developed by piston pump 10). The compression squeezes stack 46, forcing rings 48A,48B to expand laterally (i.e. radially). Such expansion causes outer and inner side surfaces 114,116 of first type rings 48A and second type rings 48B to engage the inner wall of pump cylinder 40 and the outer wall of displacement rod 42 with greater force as compared to the contact under nominal compression, thus preventing leakage past stack 46 during operation of piston pump 10. Compression also causes the volume of pockets P to decrease. As shown in Figs. 5A and 5B, the surface areas of outer and inner side surfaces 114,116 of first type rings 48A and second type rings 48B contacting the wall of pump cylinder 46 and displacement rod 42 increases due to the greater compression in the operational state.

Second type ring 48B engages first type ring 48A at contact points CP that are, from the perspective shown in Figs. 5A-5B, closer to the body centerline BCL of rings 48A,48B than to the inner and outer edges of rings 48A,48B (being that Figs. 5A-5B are two dimensional cross sections, such contact is illustrated and described as "points CP", however such contact point is annular). For example, when first type ring 48A sits atop second type ring 48B, the contact between these two rings is limited to the core of rings 48A,48B, near apex 108, and rings 48A,48B do not contact each other near their inner and outer radial portions. Contact between rings 48A,48B is limited to the core (specifically, only at the points of contact CP). Rings 48A,48B do not contact one another near the inner and outer radial portions of rings 48A,48B that engage the surfaces of pump cylinder 40 and displacement rod 42. As a result, erosion of inner and outer side surfaces 114,116 of rings 48A,48B which pump contact cylinder 46 and displacement rod 42 will not decrease the height of the stack 46. The nominal compression within stack 46 will be maintained, which allows stack 46 to maintain sealing performance.

Due to rings 48A,48B engaging one another at their cores, instead of near the inner and outer lateral portions, gap G exists between adjacent rings 48A,48B. Gap G may cover a majority of the overlap between adjacent rings 48A,48B. Contact points CP between adjacent rings 48A,48B are affected by having angle B (defined by surfaces 122 and 124) larger than angle A (defined by surfaces 110 and 112) and/or by apex surface 108 being wider (in the radial direction) than trench surface 126.

Tests performed by the inventor demonstrated that a piston paint pump having alternating polymer rings of different types, similar in geometry to those described in connection with Figs. 2-5B, pumped over two and a half times as much paint before failure as compared to a piston paint pump having prior art alternating polymer and leather rings.

The present disclosure is made using various embodiments to highlight various inventive aspects. Modifications can be made to the embodiments presented herein.

While the invention has been described with reference to an exemplary embodiment(s), it will be understood by those skilled in the art that various changes may be made and equivalents may be substituted for elements thereof without departing from the scope of the invention as defined in the appended claims. In addition, many modifications may be made to adapt a particular situation or material to the teachings of the invention without departing from the essential scope of the invention as defined in the appended claims. Therefore, it is intended that the invention not be limited to the particular embodiment(s) disclosed, but that the invention will include all embodiments falling within the scope of the appended claims.

## Claims

1. A packing stack (32) comprising:
a plurality of V-shaped packing rings (34A, 34B) arranged in a stack, wherein each of the V-shaped packing rings has an annular convex front rib portion (104) and an annular concave groove portion (106);
wherein the annular convex front rib portion includes an annular front apex surface (108), an annular outer front angled surface (110), an annular inner front angled surface (112), an annular outer side surface (114), and an annular inner side surface (116);
wherein the annular concave groove portion includes an annular trench surface (126), an annular outer rear angled surface (122), an annular inner rear angled surface (124), an annular outer rear rim surface (118), and an annular inner rear rim surface (120);
wherein the annular front apex surface is wider than the annular trench surface;
wherein the annular outer front angled surface extends between the annular front apex surface and the annular outer side surface;
wherein the annular inner front angled surface extends between the annular front apex surface and the annular inner side surface;
wherein the annular outer rear angled surface extends between the annular trench surface and the annular outer rear rim surface;
wherein the annular inner rear angled surface extends between the annular trench surface and the annular inner rear rim surface;
wherein the annular outer rear rim surface extends between the annular outer rear angled surface and the annular outer side surface;
wherein the annular inner rear rim surface extends between the annular inner rear angled surface and the annular inner side surface;
wherein the annular outer front angled surface (110) and the annular inner front angled surface (112) form a first angle;
wherein the annular outer rear angled surface (122) and the annular inner rear angled surface (124) form a second angle; **characterized in that** the second angle is greater than the first angle; and
wherein gaps (G) are located in the packing stack between adjacent annular outer front angled and outer rear angled surfaces (110, 122), and between adjacent annular inner front angled and inner rear angled surfaces (112, 124).

2. The packing stack (32) of claim 1, wherein the plurality of V-shaped packing rings comprises:
a plurality of first type V-shaped packing rings (34A) formed of a first polymer material; and
a plurality of second type V-shaped packing rings (34B) formed of a second polymer material, each second type V-shaped packing ring being positioned adjacent one of the first type V-shaped packing rings.

3. The packing stack of claim 2, wherein the second polymer material is a lubricant-filled polymer.

4. The packing stack of claim 2 or claim 3, wherein the first polymer material is ultrahigh molecular weight polyethylene (UHMWPE).

5. The packing stack of claim 2 or claim 4, wherein the second polymer material is oil-filled ultrahigh molecular weight polyethylene (UHMWPE).

6. The packing stack of claim 2 or claim 4, wherein the second polymer material is carbon-filled ultrahigh molecular weight polyethylene (UHMWPE).

7. The packing stack of any of claims 1-6, wherein the first angle is approximately 90° and the second angle is approximately 95°.

8. The packing stack (32) of any of claims 1-7, wherein the front rib of each V-shaped packing ring (34A, 34B) is configured to contact the rear groove of an adjacent V-shaped packing ring at a contact point located closer to a body centerline passing through the top apex surface and the trench surface than to the outer side surface or the inner side surface of the V-shaped packing ring.

## Patentansprüche

1. Packungsstapel (32), der Folgendes umfasst:
mehrere V-förmige Packungsringe (34A, 34B), die in einem Stapel angeordnet sind, wobei jeder der V-förmigen Packungsringe einen ringförmigen konvexen vorderen Rippenabschnitt (104) und einen ringförmigen konkaven Nutabschnitt (106) aufweist;
wobei der ringförmige konvexe vordere Rippenabschnitt eine ringförmige vordere Scheitelfläche (108), eine ringförmige äußere vordere gewinkelte Fläche (110), eine ringförmige innere vordere gewinkelte Fläche (112), eine ringförmige äußere Seitenfläche (114) und eine ringförmige innere Seitenfläche (116) aufweist;
wobei der ringförmige konkave Nutabschnitt eine ringförmige Grabenfläche (126), eine ringförmige äußere hintere gewinkelte Fläche (122), eine ringförmige innere hintere gewinkelte Fläche (124), eine ringförmige äußere hintere Randfläche (118) und eine ringförmige innere hintere Randfläche (120) aufweist;
wobei die ringförmige vordere Scheitelfläche breiter als die ringförmige Grabenfläche ist;
wobei sich die ringförmige äußere vordere gewinkelte Fläche zwischen der ringförmigen vorderen Scheitelfläche und der ringförmigen äußeren Seitenfläche erstreckt;
wobei sich die ringförmige innere vordere gewinkelte Fläche zwischen der ringförmigen vorderen Scheitelfläche und der ringförmigen inneren Seitenfläche erstreckt;
wobei sich die ringförmige äußere hintere gewinkelte Fläche zwischen der ringförmigen Grabenfläche und der ringförmigen äußeren hinteren Randfläche erstreckt;
wobei sich die ringförmige innere hintere gewinkelte Fläche zwischen der ringförmigen Grabenfläche und der ringförmigen inneren hinteren Randfläche erstreckt;
wobei sich die ringförmige äußere hintere Randfläche zwischen der ringförmigen äußeren hinteren gewinkelten Fläche und der ringförmigen äußeren Seitenfläche erstreckt;
wobei sich die ringförmige innere hintere Randfläche zwischen der ringförmigen inneren hinteren gewinkelten Fläche und der ringförmigen inneren Seitenfläche erstreckt;
wobei die ringförmige äußere vordere gewinkelte Oberfläche (110) und die ringförmige innere vordere gewinkelte Oberfläche (112) einen ersten Winkel bilden;
wobei die ringförmige äußere hintere gewinkelte Fläche (122) und die ringförmige innere hintere gewinkelte Fläche (124) einen zweiten Winkel bilden;
**dadurch gekennzeichnet, dass** der zweite Winkel größer als der erste Winkel ist; und
wobei in dem Packungsstapel Lücken (G) zwischen benachbarten ringförmigen äußeren vorderen gewinkelten und äußeren hinteren gewinkelten Flächen (110, 122) und zwischen benachbarten ringförmigen inneren vorderen gewinkelten und inneren hinteren gewinkelten Flächen (112, 124) angeordnet sind.

2. Packungsstapel (32) nach Anspruch 1, wobei die mehreren V-förmigen Packungsringe Folgendes umfassen:
mehrere V-förmige Packungsringe (34A) eines ersten Typs, die aus einem ersten Polymermaterial gebildet sind; und
mehrere V-förmige Packungsringe (34B) eines zweiten Typs, die aus einem zweiten Polymermaterial gebildet sind, wobei jeder V-förmige Packungsring vom zweiten Typ neben einem der V-förmigen Packungsringe vom ersten Typ angeordnet ist.

3. Packungsstapel nach Anspruch 2, wobei das zweite Polymermaterial ein schmierstoffgefülltes Polymer ist.

4. Packungsstapel nach Anspruch 2 oder 3, wobei das erste Polymermaterial ultrahochmolekulares Polyethylen (UHMWPE) ist.

5. Packungsstapel nach Anspruch 2 oder Anspruch 4, wobei das zweite Polymermaterial ölgefülltes ultrahochmolekulares Polyethylen (UHMWPE) ist.

6. Packungsstapel nach Anspruch 2 oder Anspruch 4, wobei das zweite Polymermaterial kohlenstoffgefülltes ultrahochmolekulares Polyethylen (UHMWPE) ist.

7. Packungsstapel nach einem der Ansprüche 1 bis 6, wobei der erste Winkel etwa 90° und der zweite Winkel etwa 95° beträgt.

8. Packungsstapel (32) nach einem der Ansprüche 1 bis 7, wobei die vordere Rippe jedes V-förmigen Packungsrings (34A, 34B) so konfiguriert ist, dass sie die hintere Nut eines benachbarten V-förmigen Packungsrings an einem Kontaktpunkt berührt, der näher an einer Körpermittellinie liegt, die durch die obere Scheitelfläche und die Grabenfläche verläuft, als an der äußeren Seitenfläche oder der inneren Seitenfläche des V-förmigen Packungsrings.

## Revendications

1. Empilement de garnitures (32) comprenant :
une pluralité d'anneaux de garniture en forme de V (34A, 34B) disposés en une pile, dans lequel chacun des anneaux de garniture en forme de V comporte une section de rebord avant convexe annulaire (104) et une section de gorge concave annulaire (106) ;
la section de rebord avant convexe annulaire inclut une surface apicale avant annulaire (108), une surface coudée avant extérieure annulaire (110), une surface coudée avant intérieure annulaire (112), une surface latérale extérieure annulaire (114), et une surface latérale intérieure annulaire (116) ;
la section de gorge concave annulaire inclut une surface de tranchée annulaire (126), une surface coudée arrière extérieure annulaire (122), une surface coudée arrière intérieure annulaire (124), une surface de rebord arrière extérieure annulaire (118), et une surface de rebord arrière intérieure annulaire (120) ;
la surface apicale avant annulaire est plus large que la surface de tranchée annulaire ;
la surface coudée avant extérieure annulaire s'étend entre la surface apicale avant annulaire et la surface latérale extérieure annulaire ;
la surface coudée avant intérieure annulaire s'étend entre la surface apicale avant annulaire et la surface latérale intérieure annulaire ;
la surface coudée arrière extérieure annulaire s'étend entre la surface de tranchée annulaire et la surface de rebord arrière extérieure annulaire ;
la surface coudée arrière intérieure annulaire s'étend entre la surface de tranchée annulaire et la surface de rebord arrière intérieure annulaire ;
la surface de rebord arrière extérieure annulaire s'étend entre la surface coudée arrière extérieure annulaire et la surface latérale extérieure annulaire ;
la surface de rebord arrière intérieure annulaire s'étend entre la surface coudée arrière intérieure annulaire et la surface latérale intérieure annulaire ;
la surface coudée avant extérieure annulaire (110) et la surface coudée avant intérieure annulaire (112) forment un premier angle ;
la surface coudée arrière extérieure annulaire (122) et la surface coudée arrière intérieure annulaire (124) forment un second angle ;
**caractérisé en ce que** le second angle est supérieur au premier angle ; et
des intervalles (G) se situent dans l'empilement de garnitures entre les surfaces coudée avant extérieure et coudée arrière extérieure annulaire adjacentes (110, 122) et entre les surfaces coudées avant intérieure et coudée arrière intérieure annulaires adjacentes (112, 124).

2. Empilement de garnitures (32) selon la revendication 1, dans lequel la pluralité d'anneaux de garnitures en forme de V comprend :
une pluralité d'anneaux de garniture en forme de V de premier type (34A) formés d'un premier matériau polymère ; et
une pluralité d'anneaux de garnitures en forme de V de second type (34B) formés d'un second matériau polymère, chaque anneau de garniture en forme de V de second type étant positionné adjacent à l'un des anneaux de garniture en forme de V de premier type.

3. Empilement de garnitures selon la revendication 2, dans lequel le second matériau polymère est un polymère rempli de lubrifiant.

4. Empilement de garnitures selon la revendication 2 ou 3, dans lequel le premier matériau polymère est du polyéthylène à poids moléculaire ultra-élevé (UHMWPE).

5. Empilement de garnitures selon la revendication 2 ou 4, dans lequel le second matériau polymère est du polyéthylène à poids moléculaire ultra-élevé (UHMWPE) rempli d'huile.

6. Empilement de garnitures selon la revendication 2 ou 4, dans lequel le second matériau polymère est du polyéthylène à poids moléculaire ultra-élevé (UHMWPE) rempli de carbone.

7. Empilement de garnitures selon l'une quelconque des revendications 1 à 6, dans lequel le premier angle est d'approximativement 90° et le second angle est d'approximativement 95°.

8. Empilement de garnitures (32) selon l'une quelconque des revendications 1 à 7, dans lequel le rebord avant de chaque anneau de garniture en forme de V (34A, 34B) est conçu pour être en contact avec la gorge arrière d'un anneau de garniture en forme de V adjacent à un point de contact situé plus près d'une ligne centrale de corps traversant la surface apicale supérieure et la surface de tranchée que de la surface latérale extérieure ou de la surface latérale intérieure de l'anneau de garniture en forme de V.
